# EUROPEAN PATENT APPLICATION

(11) **EP 4 566 456 A1**
(43) Date of publication of application: **11.06.2025**
(21) Application number: 24174608.0
(22) Date of filing: 07.05.2024
(51) Int. Cl.: A23K 10/30, A23K 20/163, A23K 50/10

(54) **FRUCTOOLIGOSACCHARIDE (FOS) SUPPLEMENTATION TO RUMINANT ANIMALS**

(71) Applicant: Galam Ltd., 3785500 Ma'Anit (IL)
(72) Inventor: FRIEDMAN, Nir, 7403774 Nes Zionna (IL); VILDER, Itay, 2018300 Shechania (IL); SCHVED, Fernando, 3057305 Bina (IL)
(74) Representative: EIP

(57) **Abstract**

Providing a predesignated dose of fructooligosaccharide from 3-9 chains supplementation to a ruminant animal for reduction of enteric Methane (CH4) production and emission from the ruminant animal.

## Description

### FIELD OF THE INVENTION

The present invention generally relates to ruminant animal feed supplementation, and more particularly, to fructooligosacharide (FOS) feed supplementation to said ruminant animals.

### BACKGROUND OF THE INVENTION

The term FOS relates to prebiotic fibers that may serve as food for beneficial archaea/fungi/protozoa/bacteria in the gut/rumen of ruminant animals. Providing FOS (also called fructooligosaccharide from 3-9 chains) to ruminant animals offers several benefits, and is related to improving digestive health, nutrient absorption, and overall animal performance.

FOS may be used to describe a group of short-chain carbohydrates composed of fructose molecules linked together by β (2-1) bonds. The biochemical composition of FOS may include chains of 3 to 9 fructose units, although longer chains may also occur. FOS fibers are considered prebiotic fibers due to their resistance to digestion in the upper gastrointestinal tract and their ability to selectively stimulate the growth and activity of beneficial archaea/fungi/protozoa/bacteria in the gut, such as the species Bifidobacteria, Lactobacilli, etc.

The production of FOS may involve enzymatic or chemical hydrolysis of inulin, a naturally occurring polysaccharide found in certain plants, such as chicory root, Jerusalem artichoke, and agave. Inulin serves as the substrate for FOS production due to its high fructose content and the presence of β (2-1) fructosyl-fructose linkages.

Several methods and sources may be used for FOS production, for example:
Enzymatic hydrolysis of inulin that may involve the use of enzymes such as inulinase or fructosyltransferase to break down the β (2-1) fructosyl-fructose linkages in inulin molecules, resulting in the formation of shorter-chain fructooligosaccharides.

FOS may be produced from chemical hydrolysis of inulin and may involve the use of acids to cleave the fructosyl-fructose linkages in inulin molecules, this catalytic action accelerates the rate of hydrolysis, allowing for more efficient conversion of inulin into FOS. This method of production may be less specific and may result in the production of a mixture of FOS with varying chain lengths and compositions.

FOS may also be produced from sucrose by harnessing a process of enzymatic transfructosylation. A disaccharide composed of glucose and fructose molecules, may be subject to enzymatic hydrolysis using enzymes such as fructosyltransferase or inulinase. These enzymes cleave the β-1,2 linkage of sucrose, transferring the fructosyl group to an acceptor molecule, with the resulting formation of fructooligosaccharides and release of glucose. After said formation, a FOS mixture may be extracted and purified to remove impurities and unwanted by-products. This purification process may involve filtration, chromatography, or other separation techniques to isolate the FOS molecules from the reaction mixture. Next, a Concentration procedure may increase the FOS content and reduce the volume of the solution. Concentration may be achieved through evaporation, membrane filtration, or other concentration methods, resulting in a more concentrated FOS solution suitable for supplementation. Finely, a drying process may be conducted to obtain a solid FOS product. Drying methods such as spray drying or freeze drying are commonly used to remove moisture from the FOS solution and produce a dry powder or granular form of FOS supplementation.

The effect of FOS inside a rumen of a ruminant animal may be demonstrated through various biochemical mechanisms, primarily by serving as substrates for beneficial rumen microbes and influencing microbial fermentation processes.

FOS may be fermented by certain rumen microbes, such as Bifidobacteria, Lactobacilli. These microbes possess enzymes capable of breaking down FOS into smaller molecules, primarily short-chain fatty acids (SCFAs) such as acetate, propionate, and butyrate.

Providing FOS to ruminant animals may include multiple benefits:
- Enhanced digestive health: FOS supplementation may selectively stimulate the growth and activity of beneficial bacteria, such as Bifidobacteria and Lactobacilli in the rumen and intestines of ruminant animals and may promote a healthy microbial balance in the gut and helps prevent the overgrowth of harmful pathogens.
- Improved nutrient digestibility: By promoting the growth of beneficial bacteria, FOS can enhance the breakdown and fermentation of dietary fiber and other complex carbohydrates in the rumen. This improves the digestibility of feed, leading to better utilization of nutrients and increased feed efficiency.
- Reduction of digestive disorders: FOS have been shown to have a protective effect against digestive disorders such as acidosis and bloat in ruminant animals and may help stabilize pH levels in the rumen and reduce the risk of digestive upsets associated with rapid changes in diet or feeding practices.
- Enhanced immune function: A healthy gut microbiome may play a crucial role in supporting the immune system of ruminant animals. By promoting the growth of beneficial bacteria, FOS can help strengthen the animal's natural defenses against pathogens and reduce the incidence of infectious diseases.
- Reduced stress and improved well-being: FOS supplementation has been associated with reduced stress responses and improved overall well-being in ruminant animals. A healthy gut microbiome may contribute to better nutrient absorption, which, in turn, may help maintain optimal body condition and reduce the negative effects of stressors such as weaning, transportation, or environmental changes.
- Enhanced growth and performance: Ruminant animals supplemented with FOS may exhibit improved growth rates, increased milk production (in dairy cows), and better reproductive performance. The improved digestive health and nutrient utilization associated with FOS supplementation may contribute to overall animal performance and productivity.
- Environmental benefits: By improving feed efficiency and reducing the risk of digestive disorders, FOS supplementation may help reducing the environmental impact of ruminant production systems.

Ruminant livestock are significant sources of methane emissions due to their unique digestive system, which involves microbial fermentation of feed in the rumen. Reducing greenhouse gasses such as Methane emissions from ruminant animals is crucial for mitigating the environmental impact of livestock agriculture and addressing climate change. Greenhouse gasses such as Methane (CH4) contribute to global warming and climate instability.

The idea of using FOS for methane reduction in ruminant animals may derived from its ability to modify the microbial populations and fermentation processes within the rumen. Ruminants, such as cattle, sheep, goats, etc. harbor complex microbial communities in their rumen, which play a crucial role in digesting fibrous feed materials. However, one of the byproducts of rumen fermentation is methane, a potent greenhouse gas.

Novel research findings suggest that supplementing ruminant animal's diet with FOS may have the potential of altering the microbial composition and metabolic pathways in the rumen, leading to reduced methane emissions. FOS serves as a prebiotic, selectively promoting the growth of beneficial bacteria while inhibiting methane-producing microbes. Additionally, FOS can stimulate the production of volatile fatty acids (VFAs) as fermentation byproducts, which are more energetically favorable for the animal and result in decreased methane production per unit of feed consumed.

FOS supplementation presents a promising strategy for sustainable livestock production. Ongoing research continues to explore optimal dosage levels, delivery methods, and long-term effects of FOS supplementation on methane reduction in ruminant animals.

There is an urgent need to promote reduced emissions of greenhouse gasses such as Methane from Ruminants livestock. Incorporating FOS supplementation into ruminant diets may contribute to efforts aimed at reducing the environmental footprint of livestock agriculture and, among others, mitigating climate change impacts.

### SUMMARY OF THE INVENTION

The following embodiments and aspects thereof are described and illustrated in conjunction with systems, devices and methods which are meant to be exemplary and illustrative and not limiting in scope. In various embodiments, one or more of the described problems have been reduced or eliminated, while other embodiments are directed to other advantages or improvements.

According to one aspect, there is provided a method of using a fructooligosaccharide from 3-9 chains supplementation, comprising the step of providing a predesignated dose of fructooligosaccharide from 3-9 chains supplementation to at least one ruminant animal, wherein the supplementation of fructooligosaccharide from 3-9 chains is configured to cause an increase in at least one rumen microbial species such as archaea/fungi/protozoa/bacteria and/or decrease at least one rumen microbial species of archaea/fungi/protozoa/bacteria and designating reduction of enteric Methane (CH4) production and emission from the at least one ruminant animal.

According to some embodiments, the supplementation of fructooligosaccharide from 3-9 chains is given in various concentrations ranging between 0.1%-2%. (% from the total dry matter intake (DMI) of the ruminant's diet).

According to some embodiments, the ruminant animal may be Cattle, Sheep Goat, Buffalo, Yak, Camel, Llama, Alpaca, Deer, Elk, Moose, Reindeer, Antelope or Ibex.

According to some embodiments, the supplementation of fructooligosaccharide from 3-9 chains is configured to increase lactilytic microbes abundance, which in turn is configured to utilize lactic acid and transforms it to VFAs such as propionate, wherein the lactilytic microbes are specifically configured to convert lactic acid to propionate wherein the rising propionate levels results in reduction of enteric Methane (CH4) production and emission from the at least one ruminant animal.

According to some embodiments, the administration of fructooligosaccharide from 3-9 chains does not significantly reduce the pH levels within the digestive system of the ruminant animal.

According to some embodiments, wherein the supplementation of fructooligosaccharide from 3-9 chains is configured to increase cellulolytic/fibrolytic microbes' abundance wherein the increase in cellulolytic/fibrolytic microbes' abundance is designated to reduce enteric Methane (CH4) production and emission from the ruminant animal.

According to some embodiments, the rumen microbial species affected by the supplementation of fructooligosaccharide from 3-9 chains is a methanogen belong to the archaea group and possibly belongs to the species *Methanobrevibacter ruminantium.*

According to some embodiments, the rumen microbial species affected by the supplementation of fructooligosaccharide from 3-9 chains is *Megasphaera elsdenii*/ *Selenomonas ruminantium*/ *Ruminococcus albus*/ *Butyrivibrio fibrisolvensl Olsenella intestinalis* or *Olsenella porci,* wherein the increase in said at least one rumen microbial species is designated to reduce enteric Methane (CH4) production and emission from the ruminant animal.

According to some embodiments, the fructooligosaccharide from 3-9 chains supplementation may be combined with probiotic microbes' strains to form a synbiotics supplementation.

### BRIEF DESCRIPTION OF THE FIGURES

Some embodiments of the invention are described herein with reference to the accompanying figures. The description, together with the figures, makes apparent to a person having ordinary skill in the art how some embodiments may be practiced. The figures are for the purpose of illustrative description and no attempt is made to show structural details of an embodiment in more detail than is necessary for a fundamental understanding of the invention.

In the Figures:
**FIG. 1** constitutes an illustrated flow chart of two in vitro experiments conducted according to some embodiments of the invention.
**FIGS. 2A** **&** **2B** constitute a graph depicting methane production as a result of FOS concentrations during a disclosed *in vitro* incubation experiment conducted in cows, according to some embodiments of the invention.
**FIG. 3** constitutes a graph depicting a metabolomic analysis of cows' rumen fluids using a high-performance liquid chromatography (HPLC), according to some embodiments of the invention.
**FIGS. 4A** and **4B** constitute tables containing diversity indices measured in all samples used in two experiments **a** and **b** conducted in cows and in sheep, according to some embodiments of the invention.
**FIGS. 5A** and **5B** illustrate similarity of the microbial communities between the different treatment groups (β diversity) through the results of two experiments **a** and **b** conducted in cows and in sheep according to some embodiments of the invention.
**FIGS. 6A** and **6B** illustrate a phylogenetic analysis of the composition and abundance of microbial taxa through the results of two experiments **a** and **b** conducted in cows and in sheep, according to some embodiments of the invention.
**FIGS. 7A** and **7B** illustrate a composition and abundance of the two major methanogenic genera in the samples through the results of experiments **a** and **b** conducted in cows and in sheep according to some embodiments of the invention.
**FIGS. 8A** and **8B** illustrate a fold change ratio at the genus level between FOS treatments and control (0% FOS), through the results of experiments **a** and **b** conducted in cows and in sheep according to some embodiments of the invention.
**FIGS. 9A** and **9B** illustrate a functional analysis for specific microbial species that demonstrated the highest/lowest fold change difference between FOS through the results of experiments a and b conducted in cows and in sheep according to some embodiments of the invention.

### DETAILED DESCRIPTION OF SOME EMBODIMENTS

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

The term, "Fructooligosaccharides (FOS)" (also known as oligofructose or oligofructan) as used herein, relates to Non-Digestible Oligosaccharide (NDO) ingredient of the Fructans family. Fructooligosaccharides may be obtained from plant sources and comprise 3-9 fructose units with the terminal fructose linked to a glucose residue by β-(1→2) glycosidic bonds, that is, they have a nonreducing sucrose end. Another type of FOS may be inulin-type fructans extracted from chicory root or extracted inulin-type fructans from all sources, as well as synthetic inulin-type fructans. The definition of the term FOS as used herein includes fructooligosaccharides having a DP- 3-9 (3-9 chains) as well as other ranges such as fructooligosaccharides having a DP- 3-5 (3-5 chains) and combinations thereof.

According to some embodiments, a supplementation of fructooligosaccharide from 3-9 chains may be given to a ruminant animal in various concentrations ranges. For example, in ranges between 0.1%-2%. (% from the total dry matter intake of the ruminant's diet). According to some embodiments, several concentrations have been examined in experiments in order to try and assess their influences as farther disclosed hereinafter.

For example and according to some embodiments of the invention, the supplementation of various concentrations of FOS (such as 0%, 0.1%, 0.2% and 0.5% of the feed ration of the ruminant's diet) may be configured to cause an increase in at least one rumen microbes' species such as archaea/fungi/protozoa/bacteria and/or decrease at least one rumen microbial species of archaea/fungi/protozoa/bacteria and designating reduction of CH4 production and emission from the at least one ruminant animal.

According to some embodiments, the claimed invention may be demonstrated by disclosing in vitro experiments that have been conducted by the applicant, in which four doses of FOS (0%, 0.1%, 0.2% and 0.5% of the feed ration of the ruminant's diet) have been tested on two different rumen fluid mixes originated from ruminant animals such as cows and sheep, separately. Each experiment includes the incubation of rumen fluids with different doses of FOS, while monitoring total gas and methane production in different time points, along with pH values and volatile fatty acid (VFA) profile in the end of each experiment.

According to some embodiments, a ruminant animal may be Cattle, Sheep Goat, Buffalo, Yak, Camel, Llama, Alpaca, Deer, Elk, Moose, Reindeer, Antelope, Ibex, etc. According to some embodiments, the experiments utilized high-throughput DNA next generation sequencing NGS in order to characterize the rumen fluids microbiome composition (prokaryotic population) and functioning, following the addition of FOS. The results of the experiments suggested that FOS supplementation had a significant effect on the cows and sheep rumen microbiome composition and their functioning as could be seen from both the biochemical and microbiome analyses.

The addition of FOS to the different rumen fluids demonstrated a dose dependent effect on both pH levels and VFA production, for example, providing 0.2% dose of FOS managed to achieve both methane reduction and increase in key performing microbes, as the important propionate producer, Megasphaera elsdenii.

As part of said experiments, experimental design and procedures involving rumen fluids sampling have been conducted, for example, one experiment (referenced here as experiment a) included ten (10) Holstein-Friesian cows (2-3 years old) and were fed a dairy ration that includes 65-70% grain (corn and soy based) and 30 - 35% roughage (oat and clover based), including mineral and vitamin mix and with free access to water.

Several hours after morning feeding, rumen fluids were extracted via the mouth using a designated sampling device comprising stomach tube attached to a vacuum pump. The rumen fluids samples were immediately transferred to CO₂-containing bottles to maintain anaerobic conditions. The samples were then transferred under cold conditions to the lab for further processing. In the lab the bottled are transferred to an anaerobic chamber to maintain anaerobic conditions for further incubation assays.

Another experiment (referenced here as experiment - b) included five (5) male, sheep (9-12 months old) that were routinely fed a conventional feed mix, and then were sampled. Shortly after animal were slaughtered and exsanguination, rumen fluids were collected directly from the animal rumen and filtered through four layers of cloth to eliminate rumen sediments and large ration particles. The samples were then transferred under cold conditions to the lab for further processing. In the lab the bottles transferred to an anaerobic chamber to maintain anaerobic conditions for further incubation assays.

In the anaerobic chamber, rumen fluids from cows and sheep (10 cows and 5 sheep, separately) were pooled and mixed to form a rumen fluids master mix to be used for the incubation assays. 4 triplicates (for example, one triplicate for each FOS in doses of: 0%, 0.1%, 0.2% and 0.5% w/v) were prepared. The rumen fluids master mixes of both cow and sheep were anaerobically diluted (for example in a ratio of 1:4) with anaerobic salt solution to maintain osmotic integrity (NaCl 6 g/l, KH2PO4 3 g/l, (NH4)2SO4 1.5 g/l, CaCl₂·2H₂O 0.79 g/l, MgSO₄·7H₂O 1.2 g/l, K2HPO₄·3H₂O 7.86 g/l, IN ddw) and transferred to a 160 ml volume serum bottles (for example, anaerobic-designated bottles which specifically designed for anaerobic measurements).

A total of 30 ml sample comprised of 28 ml of diluted rumen fluids master mix and 2 ml of FOS solution/DDW, was added. FOS solution was anaerobically prepared in a master stock of 10% and was filtered through a 0.22µm filter, prior to inoculation. In total, 12 bottles - 3 for each FOS dose were inoculated for each type of rumen fluids originated from cow or sheep - a total amount of 24 bottles). The bottles were then incubated at 38°C with gentle shaking in the dark for up to 72h.

In the end of each experiment, samples were removed from the incubator and stored at -20°c until the beginning of DNA extraction and microbiome analyses. The rumen fluids samples were submitted to DNA extraction. Briefly, 0.5ml from each sample were centrifuged and 200µl of PBS + proteinase K were added. The samples were than submitted to bead-beating for 2 min, following a 2 hours incubation at about 56°c. The samples were than centrifuged again at 10,000g and 400µl were pipetted into a magnetic beads cartridge for DNA separation.

QC for DNA integrity was performed using TapeStation system. The purified DNA samples were then sent to 16s rRNA gene NGS with both Bacteria and Archaea primers. The V4 region of 16S rDNA was amplified by PCR reaction, with barcoded primers 515F 5' - CCTACGGGAG GCAGCAG-3' and 806R 5' - CCGTCAATTCMTTTRAGT-3'.

The barcoded samples were pooled, sequenced in a MiSeq flow cell (Illumina) for 251 cycles with an average depth of 40,000 reads per sample. Raw data was analyzed using the Quantitative Insights into Microbial Ecology (QIIME2) pipeline. Paired end sequences were generated and the removing of non-biological sequences and denoising steps were done using dada2 package. The degree of similarity between sequences was defined as 97% to obtain an ASV (Amplicon sequence variant - which is referred to single species) identity that is commonly considered species level. Species annotation was carried out using BLAST against the Silva118 database. Bioinformatic analysis was performed using several bioinformatic and statistics tool. Throughout the experimental duration and at the conclusion of each trial, analytical parameters including total gas production, relative methane production as measured by Gas Chromatography, production of volatile fatty acids (VFAs) and lactic acid as assessed via High Performance Liquid Chromatography (HPLC), and pH levels were examined as part of an analytical and biochemistry analysis.

In each experiment disclosed above, gas (such as Methane) samples were collected at four (4) designated time intervals and analyzed using a Gas Chromatography (GC) system equipped with a Thermal Conductivity Detector (TCD) to quantify methane levels. Prior to the commencement of experimentation, calibration of the GC system for methane measurements was conducted using 100% pure methane gas. Calibration samples were prepared by manually injecting methane gas into the GC system via a gas-tight syringe, and standard curves were generated from five different concentrations (0.1%, 0.5%, 2.5%, 5%, 10%), each measured in triplicate. The values for each point on the standard curve were determined as the average of the triplicate measurements. Gas samples were injected into a ShinCarbon ST 100/120 packed column (RESTEK cat. C31405-03) within the GC system, with nitrogen utilized as the carrier gas at a flow rate of 30 ml/min. The initial oven temperature was set at 180°C, with the temperatures at the inlet and detector maintained at 120°C and 200°C, respectively.

Metabolomics relates to a field broadly defined as the comprehensive measurement of all metabolites. *In vitro* experiments have been conducted in order to characterize and assess certain important metabolites in the samples. According to some embodiments, the end of each experiment samples preparation included transferring 1.4 milliliters (ml) of each sample to a fresh 1.5 ml Eppendorf tube and centrifuged at 16,000g for a duration of 10 minutes. Subsequently, 900 microliters (µl) of the resulting supernatant were transferred to a new 1.5 ml Eppendorf tube, to which 100 µl of 50 millimolar (mM) H2SO4 (sulfuric acid) solution was added, achieving a final concentration of 5 mM sulfuric acid. The samples were then passed through a 0.22 micrometer (µm) filter and subjected to High Performance Liquid Chromatography (HPLC) for subsequent analysis.

Calibration and Quantification Analysis of Volatile Fatty Acids (VFAs) and Lactic Acid was conducted by utilizing an Agilent High Performance Liquid Chromatography (HPLC) system, (such as the Agilent Infinity 1200 and 1260 Infinity G1311C Quat Pump VL model), which are equipped with an Agilent 1200 Series G1362A Infinity Refractive Index Detector (RID) and an automatic autosampler/injector (such as 1260 Infinity Manual Injector with 20 µL SST sample loop and mounting stand).

An Aminex HPX-87H HPLC column designed for carbohydrates analysis, preceded by a pre-column (guard column Cation H Refill Cartridges 30 x 4.6, containing the same resin material) was installed in the chromatographic chain. The chromatographic conditions were maintained at a constant temperature of 15°C throughout the analysis, with a total run time of 70 minutes. A sample injection volume of 10 µl and a flow rate of 0.45 ml/min were employed, with 5 millimolar (mM) H2SO4 utilized as the running buffer. Quantitative determination was achieved through comparison of peak areas obtained from sample analysis with those of calibration standards. Standard solutions containing formic, acetic, propionic, isobutyric, butyric, isovaleric, and lactic acids were prepared in pure water at concentrations ranging from 1 to 50 millimolar (mM). the linearity of the standard curves was established based on the average of three injections for each solution mixture.

As part of a statistical analysis, and in general, significance was calculated according to paired Student's t-test and ANOSIM tests. Correlations were calculated according to Spearman's correlation test. In all analyses, significance was set at p value <0.1. α and β diversity analysis of 16S rRNA data was performed using software (such as PAST).

According to some embodiments of the invention, an addition of FOS to the rumen fluids demonstrated a dose dependent effect on methane and VFA production. According to some embodiments, an addition of FOS in 0.2% concentration constitutes an efficient dose in terms of pH reduction and propionate and butyrate production.

According to some embodiments of the invention, diversity and similarity analysis revealed that FOS supplementation to both cow and sheep rumen fluids demonstrated a substantial effect on the microbiome in terms of richness (number of total species) and diversity. For example, it had a strong effect on the composition and abundances of various microbial components of the rumen fluids microbiome.

According to some embodiments of the invention, specific differences in the relative abundance of certain microbial groups, at all taxonomic levels were observed, wherein the main ruminal methanogen, *Methanobrevibacter ruminantium* demonstrated a sharp reduction in its abundance following the addition of FOS. Furthermore, the second group of methanogens that was presence in both experiments, *theMethanosphaera,* also showed a similar trend of decrease, following FOS supplementation as further disclosed below.

According to some embodiments of the invention, the important lactate utilizing microbe, *Megasphaera elsdenii* demonstrated a strong and statistical increase following FOS treatment, with a strong correlation to an increase in the important VFA propionate. According to some embodiments, Butyrate, another important VFA that plays an enormous role in the ruminant health, also showed a positive correlation to the addition of FOS.

According to some embodiments of the invention, a possible administration of a combined product, that contain both FOS and a probiotic strain such as Megasphaera elsdenii with/without *Olsenella* intestinalis, may have an improved effect to the animal health, performances and/or enteric methane emission.

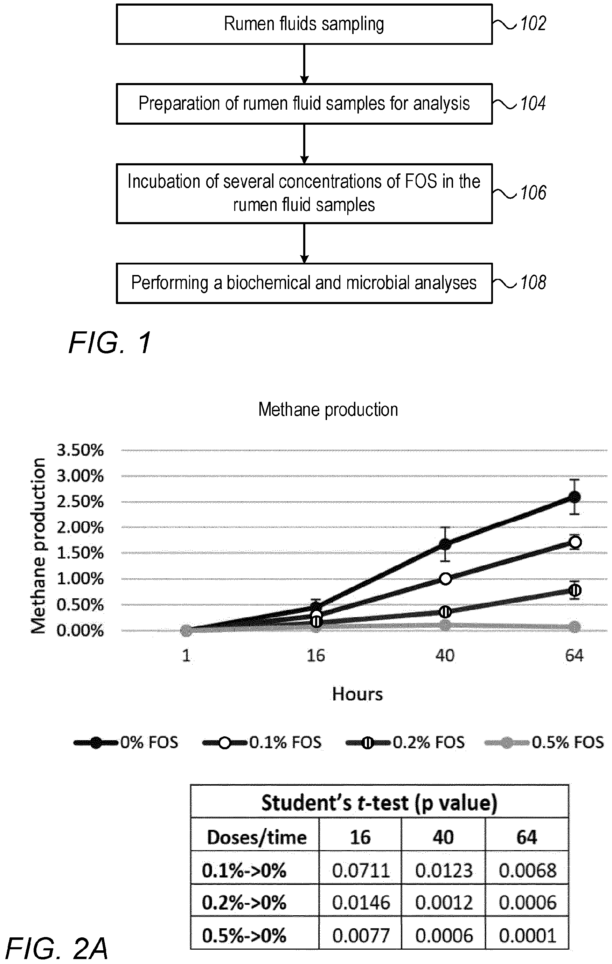

Reference is now made to **FIG. 1** which illustrates a flow chart of the two in vitro experiments disclosed above. As shown, step **102** indicates rumen fluids sampling from ruminant animals. According to some embodiments, rumen fluids may be sampled in order to evaluate its effect on methane production and VFA profile in ruminant animals. Said evaluation is designated to be determined by experiments examining fresh rumen fluids from two types of animals - dairy cows and sheep (such as lambs for meat). In the experiment disclosed in FIG. 1, 10 cows and 5 sheep were sampled.

In step **104,** the rumen fluids originated from 10 cows and 5 sheep . Following extraction, rumen fluids were anaerobically delivered to a lab where they were processed, to form a homogenous master mix (cow and sheep separately) for future analysis.

In step 106, rumen fluids from cows and sheep (10 cows and 5 sheep, separately) were pooled and mixed to form a rumen fluids master mix for the incubation assays. 4 triplicates (one triplicate for each GOFOSTM dose: 0%, 0.1%, 0.2% and 0.5% w/v) were prepared.

In step **108,** biochemical and microbiological analysis has been conducted on the rumen fluids samples and considered the following factors: a. Total gas production b. Relative methane production c. VFAs and lactic acid production d. pH e. 16s rDNA sequencing.

Reference is now made to **FIG. 2A** which illustrates a graph depicting methane production as a result of FOS' concentrations given during the disclosed in vitro incubation experiment conducted in cows. As previously disclosed, the experiments shown that the effect of 4 different doses (0%, 0.1%, 0.2%, 0.5% in triplicates- a total of 12 bottles) of FOS that were inoculated with rumen fluids and tested in a 64h in vitro incubation experiment.

As shown, Methane concentration was measured such that each dot represents the average of 3 biological replicates, wherein the X axis represents the sampling time points and the Y axis represents methane production as concentration in %. It can be clearly seen that significant differences were calculated using the depicted student's t-tests results, for each time point and FOS various doses.

During 4 time points (1, 16, 40 and 64) along the experiment, methane production from each bottle was sampled and analyzed. FOS demonstrated a dose dependent effect on methane production, as the addition of its highest concertation (0.5%) led to a significant effect and to complete reduction of the methane production. According to the experiment's results, all doses at all sampling timepoints in this experiment demonstrated a significant (at least p value < 0.1) reduction of methane production from, relatively to the control - 0% of FOS addition as can be seen the table of FIG. 2A.

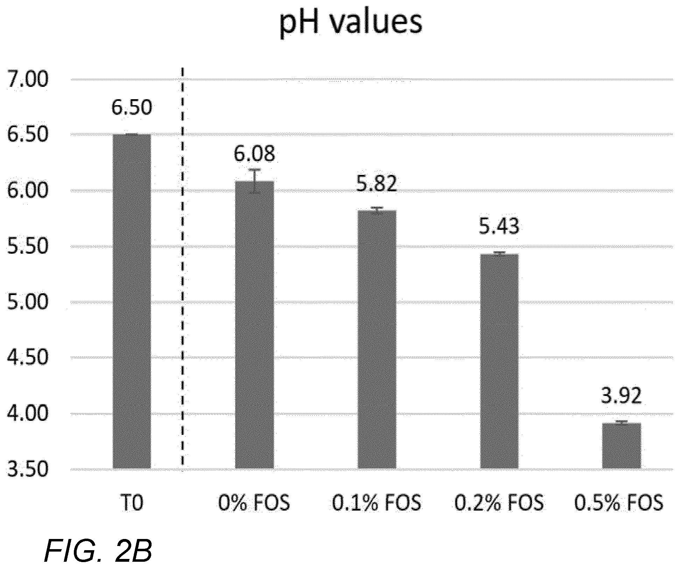

Reference is now made to **FIG. 2B** which schematically illustrates a graph depicting pH values measurements as a result of FOS' concentrations during the disclosed in vitro incubation experiment conducted in cows.

As shown, pH measurements at the beginning of the experiment (T0) and in the end of the experiment for each FOS dose. Each bar represents an average of triplicate measurements.

As shown, following 64h of incubation, rumen fluids samples were extracted from the experimental bottles and submitted to pH measurement. pH values were measured in the beginning of the experiment (prior to the incubation), and compared to their values in the end of the experiment following FOS additions. Similarly, to the methane measurements, following 64h of incubation, pH values demonstrated a dose dependent effect. While the lower FOS doses (0.1% and 0.2%) showed a mild decrease in pH (~ 0.2-0.6 log change decrease compared to the control -0%), the highest dose (0.5%) drastically reduced pH to 3.92. While methanogenesis metabolism is known to be active at pH higher than 5, below this value its stops. According to some embodiments, these observations may explain the results from the methane production measurements.

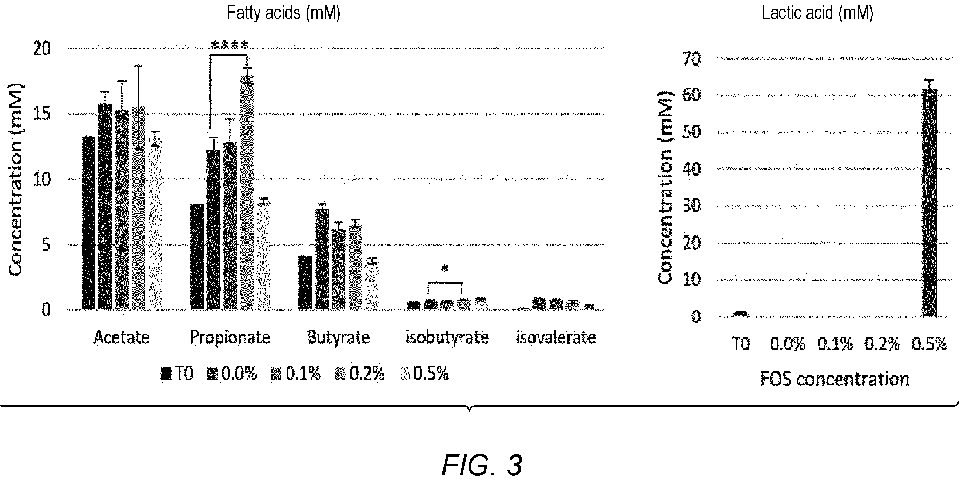

Reference is now made to **FIG. 3** which illustrates a graph depicting a metabolomic analysis of cows' rumen fluids using HPLC (high-performance liquid chromatography).

As shown, each bar in the graph represents the average of triplicate biological measurements. Significance was calculated using a student t-test. For example, the marked asterisks represent significant differences between addition of FOS and control (* denotes p<0.1, ** denotes p<0.05, *** denotes p<0.01, **** denotes p<0.001), etc.

As further shown, metabolomic analysis conducted using HPLC shed light on the results obtained from the methane production and pH measurements. The concentrations of 5 different volatile fatty acids (VFA): acetate, propionate, butyrate, isobutyrate and isovalerate and lactic acid, were measured at the beginning of the experiment (T0) and at the end of experiment for each FOS dose.

Propionate and isobutyrate were the only VFA that were significantly (p value= 0.0004 and <0.074, respectively) increased following the addition of 0.2% FOS to the rumen fluids. Other doses than 0.2% FOS either didn't induce an increase in the VFA concentrations comparing to the control (or caused a reduction), or the increase was not statistically significant. Furthermore, high FOS dose (0.5%) resulted in high lactate production which was probably the cause for low pH and directly and indirectly affected the methane production (reduced methane production).

Other doses of FOS didn't induce the production of lactic acid in the rumen fluids, alternatively induced VFA production via different metabolic pathways. The significant increase of propionate following the addition of 0.2% FOS, is highly important, as propionate acts as the major energy source for the animal, in the rumen. These results are in concordance with the former results from the pH measurements, as the pKa value of lactic acid is around 3.8, therefore high concentration of lactic acid will cause a drastic pH decrease to this range.

Therefore, the results demonstrated that in the current experimental system, the optimal effect was observed when 0.2% FOS was applied to rumen fluids, a high enough concentration that allowed a positive effect on propionate production without causing the production of lactic acid and a sharp drop in pH.

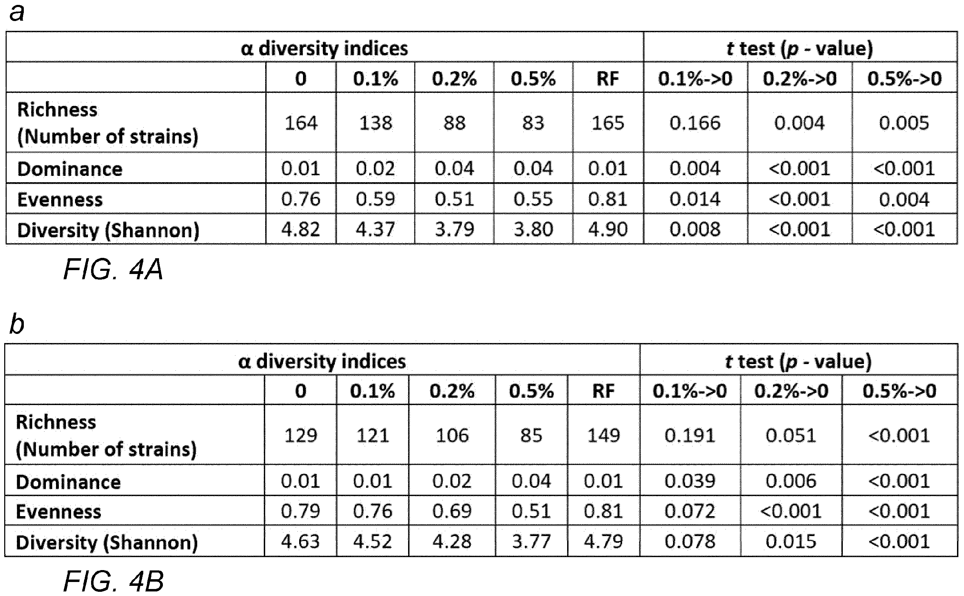

Reference is now made to **FIGS. 4A** & **4B** which constitute tables containing diversity indices measured in all samples for the two experiments conducted in cows' and sheep rumen fluids. Sheep rumen samples have been taken to validate said effects of FOS supplementation on rumen microbiome composition and diversity, in other type of ruminants. As shown, two experiments **(a,** for cow rumen fluids, **b** for sheep rumen fluids) demonstrate similarity variables within each sample. Each group represents the average of 3 biological replicates.

The number of different ASVs (richness) and the Shannon diversity index, differed significantly between the four experimental groups in the two experiments are suggesting that the addition of even the lowest dose (0.1%) of FOS to the rumen fluids, shifted and modulated the relative abundances of several microbial groups within those samples. Overall, these results implied that FOS interacts strongly (directly and indirectly) with various microbial components in the rumen fluids.

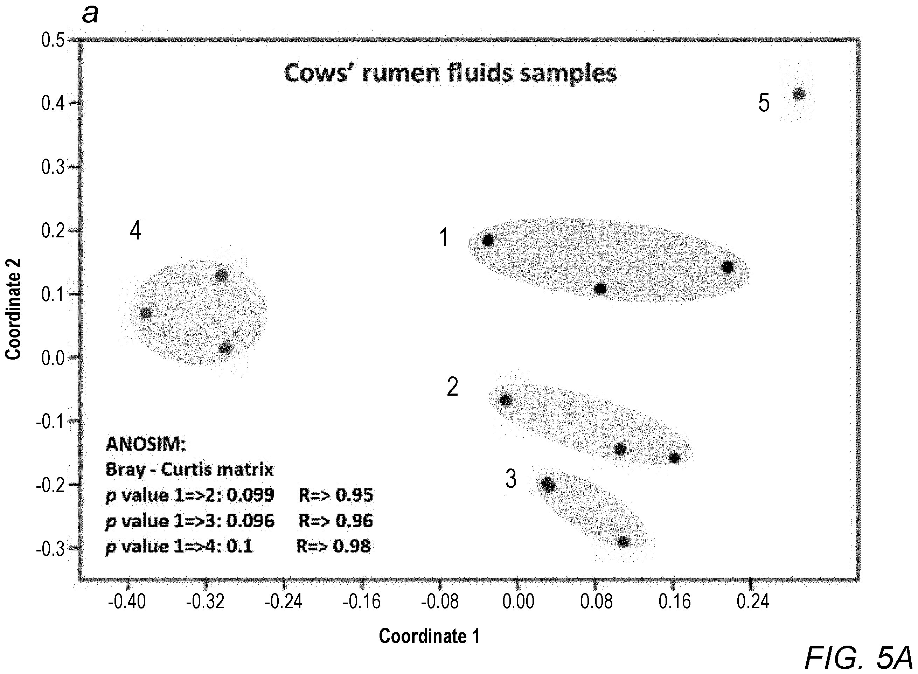

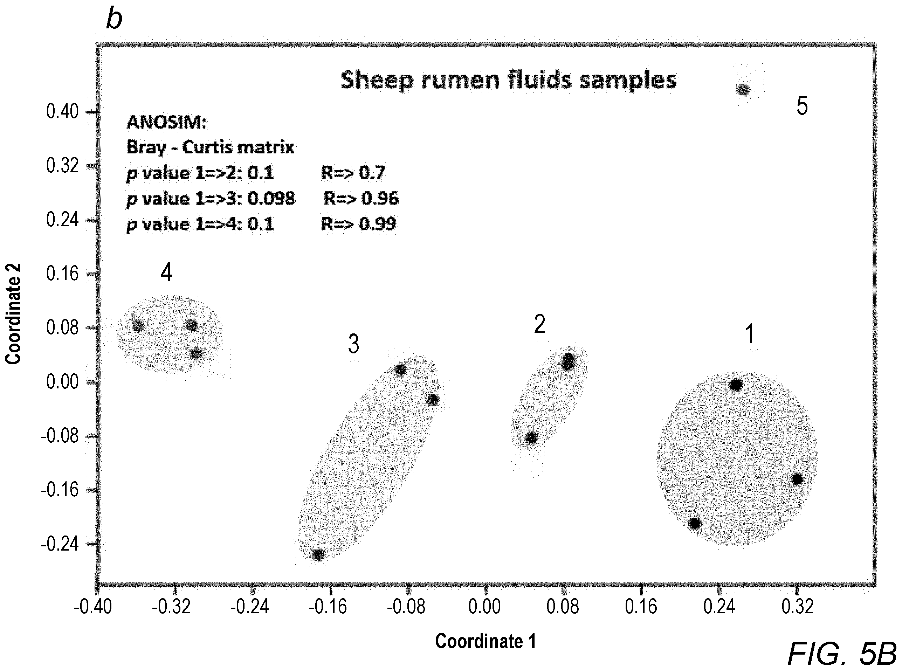

Reference is now made to **FIGS. 5A** & **5B** which illustrate similarity of the microbial communities between the different treatment groups (β diversity) through the results of two experiments **a** and **b (a** - cow rumen fluids, **b** - sheep rumen fluids). As shown, treatment groups distance between the samples, based on similarity in ASV composition (ASV similarity, ≥0.97%) of each sample calculated using the Bray- Curtis similarity index and plotted using non-metric multidimensional scaling (NMDS). Each point represents a different sample plotted according to their ASV composition and abundance. A greater distance between two points infers a lower similarity between them, whereas samples with a more similar microbial composition and abundance cluster closer together. Group 1 - control (0% FOS), Group 2- 0.1% FOS, Group 3 - 0.2% FOS, Group 4 - 0.5% FOS, sample 5 - original rumen fluids (cow/sheep).

As can be seen from the results, FOS has a strong effect on the rumen fluids microbiome, which is also apparent in a community comparisons analysis (β diversity). NMDS analysis, (ASV ≥97% identity, species level similarity) of each group using the Bray-Curtis similarity metric revealed that the samples from each treatment (0%, 0.1%, 0.2% and 0.5% FOS addition) clustered together. This suggested that each treatment group hosted its own distinct microbial community. Furthermore, analysis of similarity (ANOSIM) which measures the statistical significance of the similarity between each group, showed a strong significance (p value ≤0.1) between all treatments and the control group with strong R values (close to 1), which means that the microbiome composition of all the experimental groups in the two experiments, differed substantially from the controls.

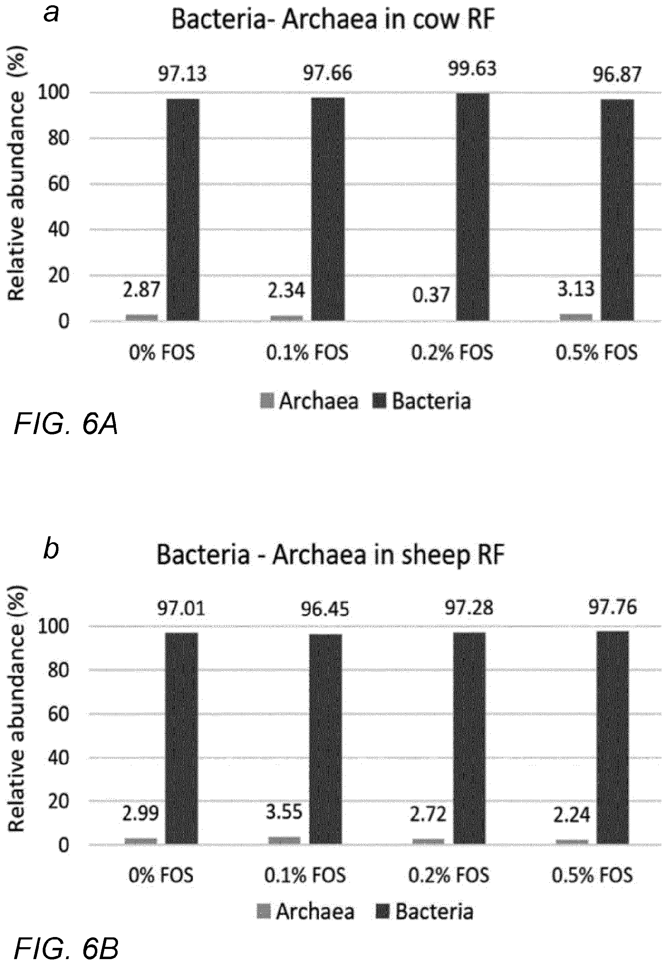

Reference is now made to **FIGS. 6A** & **6B** which illustrate a phylogenetic analysis of the composition and abundance of microbial taxa through the results of two experiments **a** and **b (a** - cow rumen fluids, **b** - sheep rumen fluids). The phylogenetic analysis performed in order to reveal the relevant microbial groups that prevail in the samples. As shown, the abundance of microbial taxa at as determined by 16S rDNA - in relation to FOS is recorded. Bar charts illustrating the average relative abundance at the Kingdom level across all treatment groups in the two experiments (a - cow rumen fluids, b - sheep rumen fluids).

First, the Kingdom level which is the highest taxonomic level was analyzed, hence, in the current analysis we evaluated Bacteria and Archaea. As expected, most of the ASVs were annotated to the kingdom Bacteria (>97%) and ~ 2-3% were annotated to the kingdom Archaea (which contains all methanogenic groups). In experiment a, only 0.2% FOS treatment demonstrated a significant decrease in the Archaea concentration relative to control (t test, p value = 0.004), while in experiment b, only 0.5% FOS treatment demonstrated a significant decrease in the Archaea concentration relative to control (t test, p value = 0.1). This implied that the medium (0.2%) and the high (0.5%) doses of FOS were effective in changing the Archaea concentration in the samples. From the results and according to some embodiments, it seems that supplementation of 0.2% FOS, may be an optimal dose also in this case.

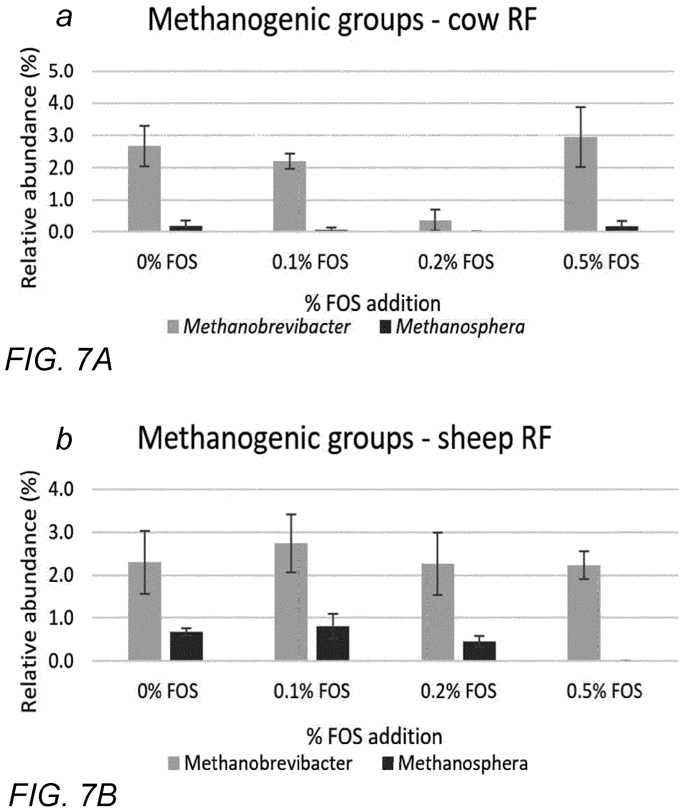

Reference is now made to **FIGS. 7A** & **7B** which illustrate a composition and abundance of the two major methanogenic genera in the samples through the results of experiments **a** and **b (a** - cow rumen fluids, **b** - sheep rumen fluids). As shown, the abundance of the two major methanogenic genera in the samples, as determined by 16S rDNA. Stack bar plots represent the average relative abundances. (a - cow rumen fluids, b - sheep rumen fluids).

As previously disclosed, Methanogens are groups of microbes that are exclusively present within the Archaea Kingdom, and consist of several sub-groups (Orders). The analysis revealed that the main methanogenic order was the Methanobacteriales, wherein this order is composed of two genera: *Methanobrevibacter* and *Methanosphaera.* These genera are known to be the most prevalent genera in the rumen of cow and sheep.

In the first experiment, the addition of 0.1% and 0.2% FOS led to a sharp and significant reduction of both methanogenic genera (for *Methanobrevibacter* - p value = 0.002 and for *Methanosphaera* - p value = 0.05), while the addition of 0.5% FOS showed the opposite trend The results from experiment **b** showed a similar trend although less significant. The addition of 0.2% FOS led to a mild decrease of the methanogenic groups with a significant decrease (p value = 0.03) of the *Methanosphaera* genus. A decrease in abundance of the Methanobrevibacter genus was also observed, following the addition of 0.2% FOS, but it was less significant. 0.5% FOS, demonstrated an ambivalent result, while experiment a led to an increase in abundance of *Methanobrevibacter,* in experiment b led to decrease of both groups. Therefore, according to some embodiments, supplementation of 0.2% FOS, may be an efficient dose.

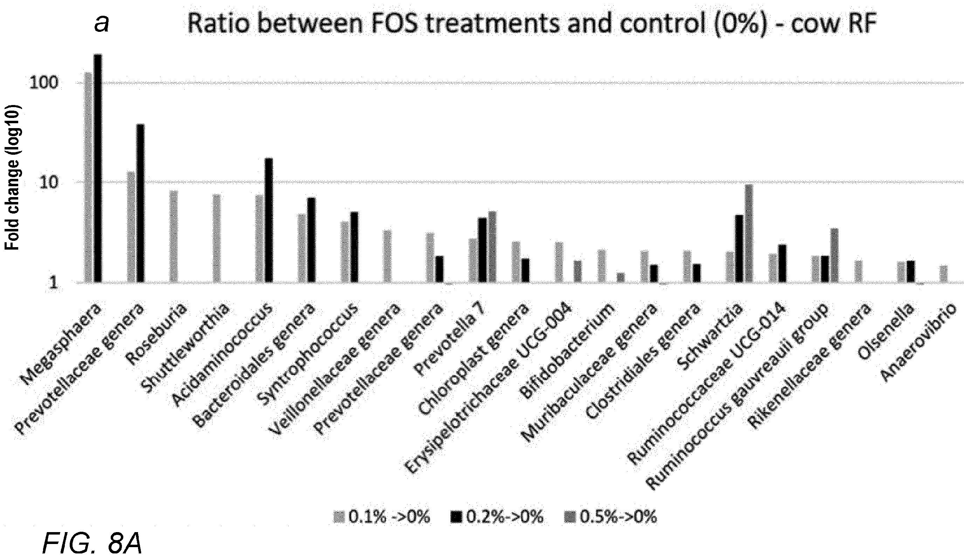

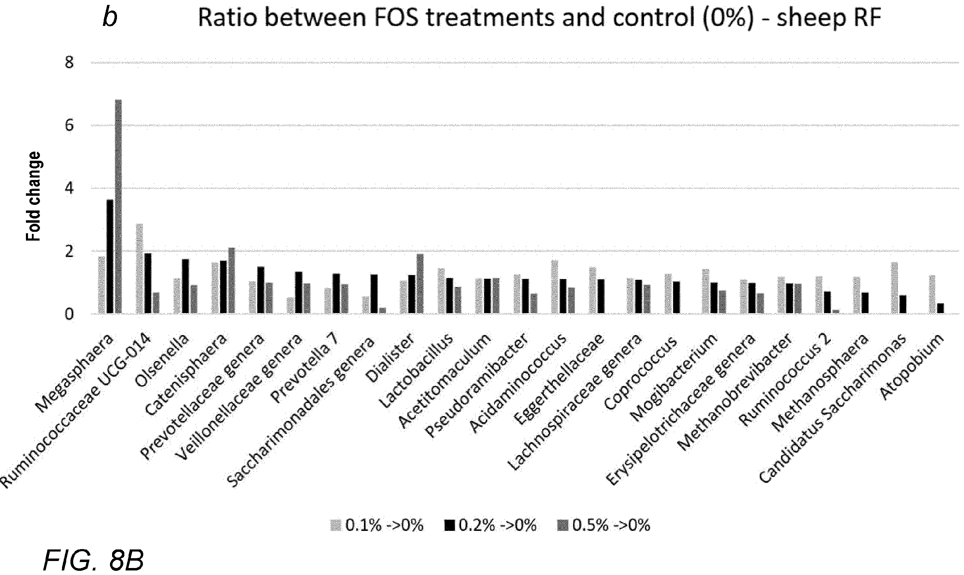

Reference is now made to **FIGS. 8A** & **8B** which illustrate a fold change ratio at the genus level between FOS treatments and control (0% FOS), through the results of experiments **a** and **b (a** - cow rumen fluids, **b** - sheep rumen fluids). As shown, the genera that demonstrated the highest fold change increase (more than X1.5) are depicted.

These results represent a further dive into the genus level. In order to evaluate which are the most effected genera following the addition of FOS supplement, a genera exhibiting at least 50% increase (a ratio of more than X 1.5) in their abundance following FOS addition, relative to the control (0% FOS) has been a point of interest.

In experiment **a,** a total of 133 different genera were present in all samples. From those 133, 21 genera demonstrated such an increase and are presented in **FIG. 8A****.** Those 21 genera constituted more than 30% of relative abundance of all ASVs detected in the sequencing effort. In experiment **b,** a total of 84 different genera were present in all samples. From those 84, 23 genera demonstrated such an increase and are presented in **FIG 8B****.** Those 23 genera constituted more than 57% of relative abundance of all ASVs detected in the sequencing effort.

As can be seen from the results, several important genera demonstrated a considerable increase in their abundances up to more than x100 following FOS addition. It is significant to note that Megasphaera is an important rumen microbe that is known to produce propionate from lactate. Scientific works demonstrated its high prevalence in efficient ruminants as opposed to its lower abundance in inefficient animals. Its strong increased following the addition of 0.2% FOS (in experiment **a)** and following the addition of 0.5% FOS (in experiment **b)** are with concordance with the increased propionate levels that were observed in the biochemical analysis. According to some embodiments, the findings disclosed above represent a strong and significant discovery in the field of the invention.

Those experiments further suggest that other genera that have increased in their concentration, following FOS addition are: Roseburia and Shuttleworthia which their members are known to be butyrate-producers, Syntrophococcus which is known to produce acetate from various sugars including fructose which is the monomer of FOS. *Dialister* spp, which its members have been associated with hyposalivation and may play a role in altering the buffering capacity of the rumen and fluid turnover, and both *Olsenella* and *Catenisphaera* which are known lactate-producing bacteria, which in turn, as demonstrated here, is consumed by species from the genus Megasphaera.

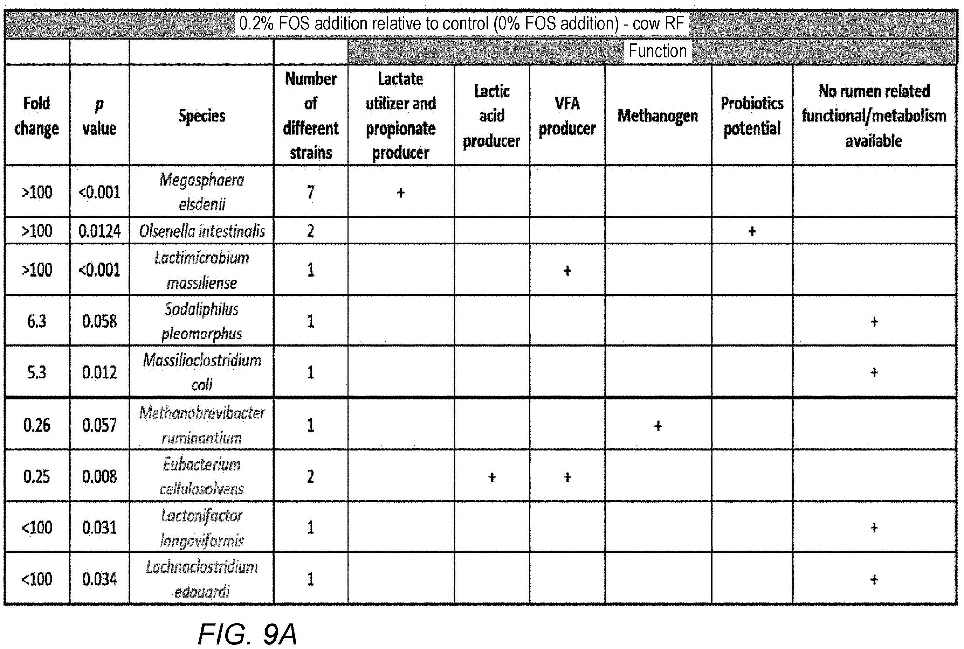

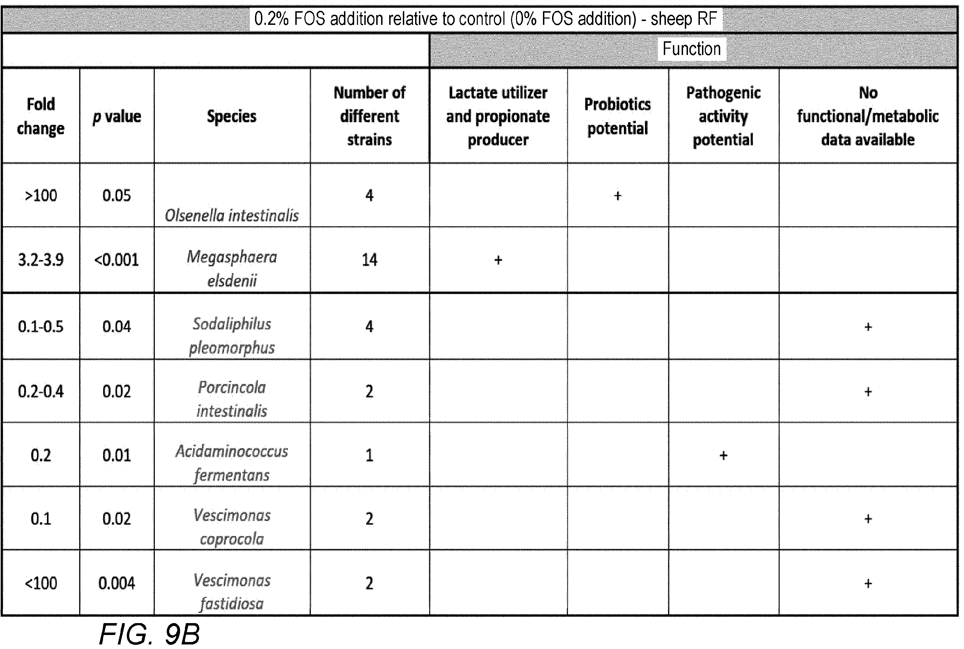

Reference is now made to **FIGS. 9A** & **9B** which illustrate a functional analysis for specific microbial species that demonstrated the highest/lowest fold change difference between FOS through the results of experiments **a** and **b (a** - cow rumen fluids, **b** - sheep rumen fluids). As shown, a fold change difference between 0.2% FOS treatment and control (0% FOS treatment) is demonstrated. Significance was measured by Student t-test.

In order to achieve a different perspective regarding the effect of FOS supplement on the rumen fluids microbiome, the functionality of the most abundant species has been analyzed (average relative abundance >0.1% in all samples). In experiment a, out of 1003 total ASVs (microbial strains), 161 ASV had an average relative abundance >0.1% in all samples. In experiment b, out of 622 total ASVs, 131 ASV had an average relative abundance >0.1% in all samples. Out of those strains, those that exhibited a statistically significant increase or decrease following the addition of 0.2% FOS has been selected and examined.

According to some embodiments, a particular focus has been set on 0.2% dose, as this dose demonstrated the optimal treatment in both biochemical and molecular levels in terms of reducing methane production, increasing essential VFA and had a mild effect on pH and lactate production without harming other important microbes, while still possessing a substantial and positive effect on general groups in the microbiome environment. In experiment a 17 ASVs belonging to 9 different species have been found and in experiment **b** 29 ASVs belonging to 7 different species have been found, all met the selection criteria mentioned above. Those 16 significant species have been searched and analyzed against our proprietary, in-house database which combines a list of microbial strains from different ecological niches and their metabolic functions, which were only tested and validated *in vitro* or *in vivo* and were published *in peer reviewed* journals.

In both experiments, *Megasphaera elsdenii* and *Olsenella intestinalis* showed high significant increase (in case of 0.2% FOS supplementation dose) in their abundance relative to the control. *Megasphaera elsdenii* is the most prevalent *Megasphaera* species in the rumen and its metabolic properties were already discussed here before.

*Methanobrevibacter ruminantium,* is one of the dominant methanogen in the rumen. According to our results, the addition of 0.2% -0.5% of FOS to both types of rumen fluids, led to a decrease in its abundance for up to almost 4 times (experiment a - 0.2% FOS addition was given).

According to some embodiments and results, said decrease in abundance disclosed in experiment a, may be a result of an indirect effect on other microbial component in the rumen fluids environments (due to, for example, pH reduction or secreted molecules from different microbes), which in turn caused *M.ruminantium* abundance reduction, whether than a direct effect on this microbe specifically.

Although the present invention has been described with reference to specific embodiments, this description is not meant to be construed in a limited sense. Various modifications of the disclosed embodiments, as well as alternative embodiments of the invention will become apparent to persons skilled in the art upon reference to the description of the invention. It is, therefore, contemplated that the appended claims will cover such modifications that fall within the scope of the invention.

## Claims

1. A method of using a fructooligosaccharide from 3-9 chains supplementation, comprising a step of providing a predesignated dose of fructooligosaccharide from 3-9 chains supplementation to at least one ruminant animal, wherein the supplementation of fructooligosaccharide from 3-9 chains is configured to cause an increase in at least one rumen microbes' species such as *archaea*/*fungi*/*protozoa*/*bacteria* and/or decrease at least one rumen microbial species of *archaea*/*fungi*/*protozoa*/*bacteria* and designating reduction of enteric Methane (CH₄) production and emission from the at least one ruminant animal.

2. The method of claim 1, wherein the supplementation of fructooligosaccharide from 3-9 chains is given in various concentrations ranging between 0.1%-2% (% from the total dry matter intake (DMI) of the ruminant's diet).

3. The method of claim 1, wherein the ruminant animal may be Cattle, Sheep Goat, Buffalo, Yak, Camel, Llama, Alpaca, Deer, Elk, Moose, Reindeer, Antelope or Ibex.

4. The method of claim 1, wherein the supplementation of fructooligosaccharide from 3-9 chains is configured to increase lactilytic microbes abundance, which in turn is configured to utilize lactic acid and transforms it to VFAs such as propionate, wherein the lactilytic microbes is specifically configured to convert lactic acid to propionate.

5. The method of any one of claims 1 or 4, wherein the administration of fructooligosaccharide from 3-9 chains does not significantly reduce the pH levels within the digestive system of the ruminant animal.

6. The method of claim 1, wherein the supplementation of fructooligosaccharide from 3-9 chains is configured to increase cellulolytic/fibrolytic microbes abundance.

7. The method of claim 6, wherein the increase in cellulolytic/fibrolytic microbes abundance is designated to reduce enteric Methane (CH₄) production and emission from the ruminant animal.

8. The method of claim 1, wherein the methanogen microbes belong to the archaea group.

9. The method of claim 8, wherein the methanogen microbes is *Methanobrevibacter ruminantium.*

10. The method of claim 1, wherein the at least one of the rumen microbial species is *Megasphaera elsdenii* / *Selenomonas ruminantium*/ *Ruminococcus albus*/ *Butyrivibrio fibrisolvens*/ *Olsenella intestinalis* or *Olsenella porci* rumen bacterium.

11. The method of claim 10, wherein the increase in said at least one rumen microbial species is designated to reduce enteric Methane (CH₄) production and emission from the ruminant animal.

12. The method of claim 1, wherein the fructooligosaccharide from 3-9 chains supplementation may further comprise probiotic microbes' strains.

13. The method of claim 1, wherein said supplementation is fructooligosaccharide from 3-5 chains.

## Amended claims

### Amended claims in accordance with Rule 137(2) EPC.

1. A method of using a fructooligosaccharide from 3-9 chains supplementation, comprising a step of providing fructooligosaccharide from 3-9 chains dose supplementation to at least one ruminant animal, wherein the dose supplementation of fructooligosaccharide from 3-9 chains is configured to increase in at least one rumen microbes' species such as *archaea*/*fungi*/*protozoa*/*bacteria* and/or decrease at least one rumen microbial species of *archaea*/*fungi*/*protozoa*/*bacteria* and reduce enteric Methane (CH₄) production and emission from the at least one ruminant animal by said dose supplementation.

2. The method of claim 1, wherein the supplementation of fructooligosaccharide from 3-9 chains is given in various concentrations ranging between 0.1%-2% (% from the total dry matter intake (DMI) of the ruminant's diet).

3. The method of claim 1, wherein the ruminant animal may be Cattle, Sheep Goat, Buffalo, Yak, Camel, Llama, Alpaca, Deer, Elk, Moose, Reindeer, Antelope or Ibex.

4. The method of claim 1, wherein the supplementation of fructooligosaccharide from 3-9 chains is configured to increase lactilytic microbes abundance, which in turn is configured to utilize lactic acid and transforms it to VFAs such as propionate, wherein the lactilytic microbes is specifically configured to convert lactic acid to propionate.

5. The method of any one of claims 1 or 4, wherein the administration of fructooligosaccharide from 3-9 chains does not significantly reduce the pH levels within the digestive system of the ruminant animal.

6. The method of claim 1, wherein the supplementation of fructooligosaccharide from 3-9 chains is configured to increase cellulolytic/fibrolytic microbes abundance.

7. The method of claim 6, wherein the increase in cellulolytic/fibrolytic microbes abundance is designated to reduce enteric Methane (CH₄) production and emission from the ruminant animal.

8. The method of claim 1, wherein the methanogen microbes belong to the archaea group.

9. The method of claim 8, wherein the methanogen microbes is *Methanobrevibacter ruminantium.*

10. The method of claim 1, wherein the at least one of the rumen microbial species is *Megasphaera elsdenii* / *Selenomonas ruminantium*/ *Ruminococcus albus*/ *Butyrivibrio fibrisolvens*/ *Olsenella intestinalis* or *Olsenella porci* rumen bacterium.

11. The method of claim 10, wherein the increase in said at least one rumen microbial species is designated to reduce enteric Methane (CH₄) production and emission from the ruminant animal.

12. The method of claim 1, wherein the fructooligosaccharide from 3-9 chains supplementation may further comprise probiotic microbes' strains.

13. The method of claim 1, wherein said supplementation is fructooligosaccharide from 3-5 chains.
